Europäisches Patentamt

**European Patent Office**

Office européen des brevets

(19)

(11) Veröffentlichungsnummer: **0 190 538 B1**

(12) **EUROPÄISCHE PATENTSCHRIFT**

(45) Veröffentlichungstag der Patentschrift: **26.06.91**

(21) Anmeldenummer: **85810577.8**

(22) Anmeldetag: **05.12.85**

(51) Int. Cl.5: **B23Q 1/02**, B29C 67/24, F16M 1/00, //B29K103:08

(54) Verfahren zum Herstellen von Maschinenteilen aus Polymerbeton sowie Maschinenteile hergestellt nach diesem Verfahren.

(30) Priorität: **05.02.85 DE 3503763**

(43) Veröffentlichungstag der Anmeldung:
**13.08.86 Patentblatt 86/33**

(45) Bekanntmachung des Hinweises auf die Patenterteilung:
**26.06.91 Patentblatt 91/26**

(84) Benannte Vertragsstaaten:
**CH DE FR GB LI**

(56) Entgegenhaltungen:
**DE-A- 2 334 489**
**GB-A- 1 041 921**
**GB-A- 2 052 514**

**WERKSTATT UND BETRIEB, Band 115, Nr. 11, November 1982, Seiten 747-750, Carl Hanser Verlag, München, DE; H. SCHULZ et al.: "Methacrylatharzbeton - Werkstoffalternative für Messplatten aus natürlichem Hartgestein"**

**H.TANNER, Polymerbeton im Werkzeugmaschinenbau, erschienen im Industrieanzei-**

ger, W.Girardet-Verlag, Essen, Nr. 49 / 22.06.1983

(73) Patentinhaber: **Fritz Studer AG**
**Thunstrasse 15**
**CH-3612 Steffisburg(CH)**

(72) Erfinder: **Renker, Hansjörg, Dr.-Ing.**
**Wiesenweg 25**
**CH-3625 Hilterfingen(CH)**
Erfinder: **Abegglen, Martin**
**Waldeggstrasse 14**
**CH-3800 Interlaken(CH)**

(74) Vertreter: **Wilhelm & Dauster Patentanwälte**
**European Patent Attorneys**
**Hospitalstrasse 8**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Maschinenteil, inbesondere für eine Werkzeugmaschine, aus Polymerbeton, bei welchem ein Füllstoffgemenge aus Gesteinspartikeln in einem durch eine Sieblinie definierten Mischungsverhältnis in eine Bindemittelmatrix eingebunden ist, wobei möglichst viele der benachbarten Partikel aneinander anliegen und sich gegenseitig abstützen.

Die Erfindung betrifft weiter ein Verfahren zum Herstellen von Maschinenteilen, wie Maschinenbetten, Maschinenständer, Messtischplatten o.dgl., aus Polymerbeton, bei welchem ein Füllstoffgemenge aus Partikeln aus Gestein mit einem Bindemittelsystem aus Harz, Härter und Zusätzen vermischt, in eine Giessform eingefüllt und verdichtet wird, wobei aus Gesteinen hoher Festigkeit gebrochene Partikel in einem durch eine Sieblinie definierten Mischungsverhältnis und ein Bindemittelsystem verwendet werden, welches während des Verdichtens in seinem flüssigen Zustand die Partikel benetzt und einen Schmiereffekt bewirkt, und wobei die Mischung aus Partikeln und Bindemittelsystem in der Giessform derart verdichtet wird, dass möglichst viele der benachbarten Partikel einander berühren, wobei das Bindemittelsystem wenigstens teilweise zwischen den Partikeln verdrängt und in Hohlräume zwischen den Partikeln und an die Aussenseite getrieben wird.

Bei bekannten Verfahren (beispielsweise durch die Veröffentlichung "PLEXILITH MA-Beton Konstruktionsteile" der Röhm GmbH, Darmstadt und das Patent GB-A-2052 514 B) werden die Gesteinspartikel mit Bindemittel umhüllt, um einen guten Zusammenhalt zu erzielen. Die mechanische Festigkeit und der Elastizitätsmodul eines derartigen Polymerbetons wird wesentlich durch das Bindemittel beeinflusst. Es ergeben sich Schwierigkeiten bezüglich des Langzeitverhaltens, insbesondere bezüglich der Kriechstabilität, da eine Stabilisierung erst nach einem langen Zeitraum eintritt, beispielsweise einem Zeitraum von mehr als 100 Tagen.

Es ist auch bereits in einem Vortrag darauf hingewiesen worden (H. Tanner, FRITZ STUDER AG, "Polymerbeton im Werkzeugmaschinenbau", erschienen im Industrieanzeiger, W. Girardet, Fachzeitschriftenverlag, Essen, Nr.49, vom 22.06.1983), dass angestrebt werden soll, dass die ein Maschinenbett beanspruchenden Kräfte möglichst sämtlich im Formschluss durch das Gestein übertragen werden sollen. Es soll ein Bindemittelsystem verwendet werden, das einen Schmiereffekt für die Gesteinspartikel bei der Aufbereitung und beim Verdichten bewirkt. In diesem Vortrag wird weiter darauf hingewiesen, dass die Gesteinspartikel der verschiedenen Korngrössen, deren Mischungsverhältnis durch eine Sieblinie definiert wird, nicht durch Mikrorisse geschwächt sein soll. Bei der Gesteinswahl soll darauf geachtet werden, dass Gesteine mit hoher Festigkeit verwendet werden, die sich durch hohe Dichte und möglichst richtungslosen Aufbau auszeichnen. Als bevorzugt werden Tiefengesteine bezeichnet, wie Basalt, Flint, Gabbro, Diabase, Dolerit und Diorit. Es wurde auch darauf hingewiesen, dass die Bruchstruktur der Oberflächen und die Gesteinsform von erheblicher Bedeutung sind.

Der Erfindung liegt die Aufgabe zugrunde, Maschinenteile der eingangs genannten Art und ein Verfahren der eingangs genannten Art mit welchem solche Maschinenteile hergestellt werden können, zu schaffen, die sich durch eine höhere Festigkeit sowie gutes Langzeitverhalten und gute Kriechstabilität auszeichnen. Diese Aufgabe wird durch die kennzeichnenden Merkmale der Patentansprüche 1 und 2 gelöst.

Durch dieses Verfahren können Maschinenteile aus Polymerbeton hergestellt werden, die in ihren Eigenschaften nur relativ wenig durch das Bindemittel beeinflusst werden. Durch den Einsatz eines Feinanteils für das Füllstoffgemenge aus Hartstoffen lassen sich die mechanischen Eigenschaften und insbesondere ihr Elastizitätsmodul und die Festigkeit wesentlich verbessern, da bisher gerade der Feinanteil für eine Absenkung dieser Werte in erheblichem Masse verantwortlich war. Ein derartiger Polymerbeton hat Eigenschaften, die den Eigenschaften eines Natursteins sehr nahekommen und sogar gegenüber diesem zu deutlichen Verbesserungen führen können. Da die Partikel aus Gestein und auch aus Hartstoffen direkt aneinander anliegen und sich gegenseitig abstützen, werden auftretende Kräfte direkt über die Partikel übertragen.

Die möglichst kubische Gestalt der Partikel ist von erheblichem Vorteil, da Partikel mit dieser Gestalt günstig zu einer dichten Packung aneinander fügbar sind und eine flächige Anlage untereinander ermöglichen. Günstig ist es dabei auch, wenn die Partikel gezackte oder geriefte Bruchflächen aufweisen, da sie dich dann gegenseitig verhaken, so dass sie auch Kräfte übertragen können, die nicht lotrecht zu den aneinanderliegenden Flächen gerichtet sind. Die Partikel verhaken sich miteinander, so dass sie auch nicht mehr gegeneinander verschiebbar sind. Durch das direkte Uebertragen der auftretenden Kräfte zwischen den Partikeln aus Gestein und auch aus Hartstoff unter weitgehender Ausschaltung des Bindemittels tritt auch bei dem Aushärten nahezu kein Schwinden an den Abmessungen der Maschinenteile auf. Das Langzeitverhalten und insbesondere die Kriechstabilität sind sehr vorteilhaft.

Da feine Partikel, insbesondere Mehlkorn, die Kriechstabilität und auch den Elastizitätsmodul der aus Polymerbeton hergestellten Bauteile negativ beeinflussen, soll der Anteil an Feinstpartikeln möglichst klein gehalten werden. In weiterer Ausgestaltung der Erfindung wird deshalb vorgesehen, dass die Sieblinie für das Mischungsverhältnis der Korngrössen der Gesteinspartikel durch Versuche ermittelt wird, bei welchen Prüfkörper einer Kriechprüfung ausgesetzt werden, wonach abhängig von deren Ergebnis der Anteil von Feinstpartikeln festgelegt wird. Dieses Festlegen erfolgt dabei derart, dass einerseits ein unzulässiges Kriechen ausgeschlossen wird, während andererseits das Auftreten von über die Grössen von einzelnen Poren hinausgehenden Hohlräumen vermieden wird.

In weiterer Ausgestaltung der Erfindung werden Partikel aus Hartstoff verwendet, deren Körnung nicht grösser als 1 mm ist. Es hat sich gezeigt, dass es zum Erreichen einer wesentlichen Verbesserung der Festigkeit und des Elastizitätsmoduls von Polymerbeton ausreicht, den Feinanteil bis etwa zu Körnung von 1 mm aus Partikeln aus Hartstoff vorzusehen.

In weiterer Ausgestaltung der Erfindung wird vorgesehen, dass als Feinanteil Partikel aus Aluminiumoxyd oder Siliziumkarbid oder Siliziumnitrid oder Quarz oder einer Mischung aus diesen Materialien vorgesehen werden. Diese Materialien weisen einerseits einen sehr hohen Elastizitätsmodul auf, der sogar noch weit über den Werten von Stahl liegt. Andererseits handelt es sich jedoch um Materialien die in genügender Menge preiswert zur Verfügung stehen, so dass dadurch die Herstellung insgesamt nicht verteuert wird.

Insgesamt ergibt sich der wesentliche Vorteil, dass bei erfindungsgemäss hergestellten Maschinenteilen eine Verminderung der Wandstärken oder sonstiger Abmessungen möglich ist, da durch die Feinanteile aus Hartstoff die Festigkeitseigenschaften deutlich verbessert werden.

In weiterer Ausgestaltung der Erfindung wird vorgesehen, dass ein Bindemittelsystem verwendet wird, das in flüssigem Zustand eine Viskosität von etwa 100 bis 300 mPa sec aufweist. Geeignet ist beispielsweise ein Bindemittelsystem aus einem Biphenol-A-Epoxydharz mit einem Härter aus aliphatischen Polyaminen. Dieses Bindemittel besitzt einerseits eine derartige Viskosität, das es den Partikeln erlaubt, relativ leicht in die der grössten Packungsdichte entsprechende Lage hineinzugleiten, während es andererseits ebenso leicht zwischen den Partikeln verdrängt werden kann. Selbstverständlich muss das Bindemittelsystem so eingestellt sein, dass es seinen Gelierpunkt nicht vor dem Ende einer abschliessenden Verdichtung erreicht. In der Praxis hat es sich als vorteilhaft erwiesen, wenn das Bindemittel so eingestellt wird, dass der Gelierpunkt etwa nach zwei bis drei Stunden erreicht wird.

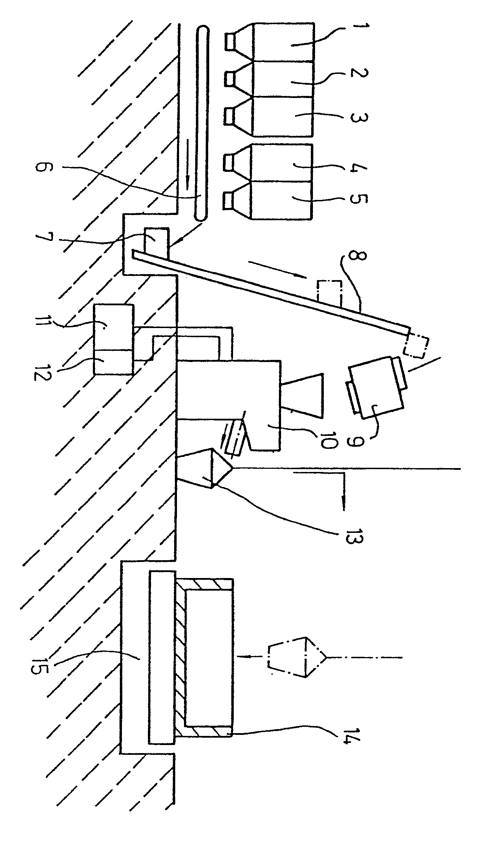

Weitere Merkmale und Vorteile der Erfindung ergeben sich aus der Erläuterung des erfindungsgemässen Verfahrens anhand einer Verwirklichung einer in der Zeichnung dargetellten vollautomatischen Anlage. Selbstverständlich ist das erfindungsgemässe Verfahren auch ohne jegliche Automation oder mit unterschiedlichen Stufen einer Automation durchführbar.

Vor der Verarbeitung zu Polymerbeton ist zunächst eine geeignete Gesteinsauswahl zu treffen. Diese Auswahl geschieht im Hinblick auf die gewünschten Eigenschaften der fertigen Bauteile aus Polymerbeton, d.h. insbesondere hinsichtlich maximaler Festigkeit und maximalen Elastizitätsmoduls. Der Elastizitätsmodul sollte über 35 000 N/mm² betragen. Da die Gesteinspartikel in dem fertigen Bauteil aus Polymerbeton die auftretenden Kräfte direkt untereinander übertragen sollen, sollten sie möglichst keine Mikrorisse aufweisen. Eine Auswahl der Gesteinsart wird somit nach der geologischen Herkunft vorgenommen. Bevorzugt werden Tiefengesteine, wie Basalt, Flint, Gabbro, Diabase, Dolerit oder Diorit verwendet, die in ihrer Entstehungsgeschichte keiner Faltung o.dgl. ausgesetzt waren, so dass die Gefahr von Mikrorissen relativ gering ist. Das Vorhandensein von Mikrorissen wird anhand von Proben überprüft. Bei der Gesteinsauswahl wird auch eine Analyse der Zusammensetzung des Gesteins vorgenommen, sowie eine Prüfung auf physikalische und mechanische Eigenschaften. Beispielsweise werden das spezifische Gewicht, die Wärmeleitfähigkeit, der thermische Ausdehnungskoeffizient o.dgl. sowie der Elastizitätsmodul und die Zugfestigkeit geprüft.

Nach dem aufgrund der vorstehend erläuterten Kriterien vorgenommenen Auswählen der Gesteinsart wird dann das Gestein zerkleinert.

Nach diesem Zerkleinern erfolgt eine weitere Prüfung darauf, ob das Gestein für einen Polymerbeton geeignet ist, wobei auch gleichzeitig durch Ueberprüfen auf Mikrorisse die Qualität des Zerkleinerns überprüft wird. Nach dem Zerkleinern wird vor allem aber auch die Form der gebrochenen Gesteinspartikel überprüft. Die Gesteinspartikel sollen eine möglichst kubische Partikelform aufweisen, wobei ein zulässiges Kantenlängenverhältnis von etwa 1 : 1,4 festgelegt wird. Höchstanteil an Körnern mit ungeeigneten Formungen und Rundungen 30% (Körneranzahl). Wenn die derart definierte kubische Raumform nicht erhalten wird, so ist das gewählte Gestein für die Herstellung von Polymerbeton mit der angestrebten Qualität nicht brauchbar.

Zusammen mit einem Reinigen und Trocknen werden die Gesteinspartikel durch Aussieben sortiert, und zwar von Mehlkorn (etwa 4 Micron) bis zu Grobkorn (16 mm und grösser). Das Sortieren erfolgt in wenigstens etwa fünf Stufen. Die sortierten Gesteinspartikel mit einer Korngrösse ab etwa 1 mm werden entsprechend ihrer Korngrösse in Behälter oder Container abgefüllt. Aus diesen Behältern oder Containern werden die Gesteinspartikel der verschiedenen Korngrössen in Mengen entnommen, die nach einer vorher für jede Gesteinsart ermittelten Sieblinie in einem definierten Mischungsverhältnis zusammengegeben werden. Wie die Sieblinie ermittelt wird, wird später noch erläutert.

Die Feinanteile, d.h. Gesteinspartikel bis zu einer Grösse von etwa 1 mm, werden nicht verwendet. An deren Stelle werden Partikel aus einem Hartstoff eingesetzt, d.h. aus einem Material, das einen höheren Elastizitätsmodul und auch eine höhere Zugfestigkeit als das Gestein aufweist. Bevorzugt werden als Hartstoffe Aluminiumoxyd, Siliziumkarbid, Siliziumnitrid oder Quarz jeweils alleine oder in Mischungen vorgesehen. Quarz oder Quarzglas mit dem Ausdehnungskoeffizienten $\alpha <$ 1 kann ebenfalls verwendet werden. Diese Hartstoffe lassen sich in genügend grosser Menge preiswert bereitstellen. Als Hartstoffe können auch Metalle vorgesehen werden, beispielsweise Stahl- oder Graugusspartikel, durch die ebenfalls bereits eine Verbesserung der Eigenschaften des Polymerbetons erzielbar sind. Derartige metallische Werkstoffe sollten jedoch nur eingesetzt werden, wenn bekannt ist, dass die Maschinenteile aus Polymerbeton keinen stärkeren Wärmebeanspruchungen ausgesetzt werden, da sonst, insbesondere durch unterschiedliche thermische Ausdehnungen, Schäden im Polymerbeton entstehen könnten. Die erwähnten Materialien haben darüber hinaus gegenüber Metallen den Vorteil, dass ihr Elastizitätsmodul wenigstens doppelt so hoch ist, wie der Elastizitätsmodul von Stahl, so dass der angestrebte Effekt in stärkerem Masse verwirklicht werden kann.

Die Anlage gemäss der beigefügten Zeichnung enthält drei Blätter 1, 2 und 3 mit nach Korngrössen sortierten Gesteinspartikeln. sowie zwei Behälter 4 und 5 mit Partikeln aus Hartstoff der vorstehend erläuterten Art. Diese Behälter 1 bis 5 sind oberhalb eines Transportbandes 6 angeordnet, auf welches die Partikel in entsprechend dem festgelegten Mischungsverhältnis dosierten Mengen zu einer Schütte 7 transportiert werden. Die Schütte 7 ist Bestandteil eines Förderers 8 und schüttet die dosierten Partikel in einen Zwangsmischer 9. Nach einer Mischung in dem Zwangsmischer 9 werden die Partikel in eine Gemischaufbereitungsmaschine 10 eingeschüttet, in welcher ein Bindeharz, Härter und Zusätze zugeführt werden, die aus verschiedenen Tanks z.B. Pos. 11 und 12 in die Gemischaufbereitungsmaschine 10 eingepumpt werden. Bevorzugt findet als Bindemittel ein Bisphenol-A-Epoxydharz mit einem Härter aus alipatischen Polyaminen Anwendung, der eine Minimalviskosität aufweist, die zwischen 100 bis 300 mPa sec liegt. Das Bindemittelsystem ist so eingestellt, dass es seinen Gelierpunkt etwa nach zwei bis drei Stunden erreicht. Das in der Gemischaufbereitungsmaschine 10 aufbereitete Gemisch wird in eine Giesspfanne 13 eingefüllt, die anschliessend einer Giessform 14 zugestellt wird. Die Giessform 14 ist auf einem Schwingtisch angeordnet, der zum Verdichten der Füllung zu Schwingungen angeregt wird. Die Verdichtungszeit richtet sich nach der Giessform, d.h. nach der Grösse und der möglicherweise komplexen Form 14 des zu giessenden Maschinenteils.

Bei dem Verdichten wirkt das Bindemittelsystem aufgrund der eingestellten Viskosität als ein Schmiermittel, das es zunächst erleichtert, dass die Partikel in die Position gelangen, in denen die höchste Packungsdichte gegeben ist. Dabei durchdringen die Partikel die sie umgebende Harzhaut des Bindemittelsystems, so dass ein direkter Kontakt zwischen den Partikeln hergestellt wird. Das Bindemittelsystem wird zum grossen Teil nach oben herausgedrückt, so dass sich auf der Oberseite der Giessform zunächst ein "See" an Bindemittelsystem ausbildet. Da das Maschinenteil so eingeformt ist, dass es bei dem Giessen zunächst auf dem Kopf steht, bildet das aus dem Gemisch austretende Bindemittelsystem nachher, nach dem Aushärten, die Unterseite des hergestellten Bauteils. Anstelle eines Verdichtens durch eine Schwingungserregung kann unter Umständen auch vorgesehen werden, dass das aufbereitete Gemisch in der Giessform 14 derart verpresst wird, dass eine hohe Packungsdichte erreicht wird und das Bindemittelsystem ausgetrieben wird.

Die verwendeten Giessformen müssen bezüglich Material und Konstruktion derart ausgeführt werden, dass die notwendige Verdichtungsenergie auf die Füllung übertragen werden kann. Je nach abzugiessender Stückzahl wird die Giessform aus Holz oder Metall oder einer Kombination von beidem hergestellt. Die für die Steifigkeit der Bauteile entscheidenden Bereiche werden in der Regel mit Wandstärken von 60 bis 80 mm ausgeführt. Dies entspricht ungefähr der dreifachen Wandstärke gegenüber einer Konstruktion aus Grauguss, wobei jedoch ein vergleichbares Gewicht erhalten wird. Da Materialanhäufungen nicht schädlich sind, können bezüglich der Belastung besonders kritische Bereiche beliebig verstärkt werden, was bei nur unwesentlicher Erhöhung des Gewichtes zu einer wesentlichen Erhöhung der Bauteilsteifigkeit führt. Hohlräume werden als sogenannte verlorene Kerne eingesetzt, so dass eine statisch vorteilhafte Gestaltung der inneren Form des Bauteils möglich ist. Einsätze aus Metall, die bezüglich der Lagetoleranz im 10tel Millimeterbereich liegen, werden in der Giessform vorher befestigt und direkt in das Bauteil eingegossen. Fertig bearbeitete Maschinenteile, die Lagetoleranzen im 100stel Millimeterbereich aufweisen sollen, werden aufeinander ausgerichtet und nachträglich eingegossen. Führungsbahnen werden üblicherweise direkt abgeformt oder auch als fertig bearbeitete Führungselemente nachträglich eingegossen.

Wie schon erwähnt wurde, wird zum Festlegen des Mischungsverhältnisses der Korngrössenverteilung der Partikel für jede Gesteinsart eine Sieblinie ermittelt. Für die Korngrössenverteilung wird zunächst die Verteilungskurve nach Fuller zugrundegelegt. Es werden dann Probestäbe gegossen, mit welchen Kriechversuche durchgeführt werden.

Diese Probestäbe besitzen einen quadratischen Querschnitt von 80 mal 80 mm und eine Länge von einem Meter. Sie werden auf in Abstand von einem Meter angeordnete Auflagen aufgelegt, wonach in ihrer Mitte die durch das Eigengewicht verursachte Durchbiegung mit Hilfe einer Messuhr gemessen wird. Die Messwerte der Durchbiegung werden in Abhängigkeit über die Zeit als eine Kriechkurve aufgetragen. Eine zulässige Kriechstabilität ist dann gegeben, wenn nach einer vorgegebenen Zeit, beispielsweise nach drei Tagen, keine Bewegung mehr in den Probestäben auftritt, d.h. das Kriechen beendet ist. Generell ist dabei zu sagen, dass abhängig von der Form der Gesteinspartikel die Fuller-Kurve angenähert wird. Wenn sich bei den Kriechversuchen an den Probestäben herausstellt, dass die Kriechstabilität nicht ausreicht, so wird der Anteil der Feinstpartikel reduziert. Danach werden erneut Probestäbe hergestellt und Kriechversuche durchgeführt. Falls die Kriechstabilität danach immer noch nicht ausreichen sollte, wird das Reduzieren der Feinstpartikel mit anschliessendem Abgiessen von Probestäben und durchführen von Kriechversuchen wiederholt. Die Grenze, bis zu der Anteil an Feinpartikeln reduzierbar ist, wird dann erreicht, wenn sich aufgrund der Reduzierung der Feinstpartikel in dem Bauteil Hohlräume ausbilden, die über Porengrössen hinausgehen. Wenn sich durch die Reduzierung der Feinstpartikel bei gleichzeitiger Vermeidung von Hohlraumbildung keine ausreichende Kriechstabilität erzielen lässt, so ist das Gesteinsmaterial ungeeignet, insbesondere aufgrund der beim Zerkleinern entstandenen Raumform der Gesteinspartikel. Die Erfahrung hat gezeigt, dass dies meist dann der Fall ist, wenn die Abweichungen von der idealen kubischen Form über das Kantenlängenverhältnis 1 : 1,4 hinausgeht.

**Ansprüche**

1. Maschinenteil, insbesondere für eine Werkzeugmaschine, aus Polymerbeton, bei welchem ein Füllstoffgemenge aus Gesteinspartikeln in einem durch eine Sieblinie definierten Mischungsverhältnis in eine Bindemittelmatrix eingebunden ist, wobei möglichst viele der benachbarten Partikel aneinander anliegen un sich gegenseitig abstützen, dadurch gekennzeichnet, dass das Füllstoffgemenge im wesentlichen aus kubischen aus Partikeln besteht und dass der Feinanteil des Füllstoffgemenges, also Gesteinspartikel bis zu einer Grösse von 1 mm, aus einem oder mehreren Hartstoffen mit einem gegenüber dem Gestein erhöhten Elastizitätsmodul und höherer Festigkeit besteht.

2. Verfahren zum Herstellen von Maschinenteilen, wie Maschinenbetten, Maschinenständern, Messtischplatten o.dgl., aus Polymerbeton nach Anspruch 1, bei welchem ein Füllstoffgemenge aus Partikeln aus Gestein mit einem Bindemittelsystem mit Harz und Härter vermischt, in eine Giessform eingefüllt und verdichtet wird, wobei aus Gesteinen hoher Festigkeit gebrochene Partikel in einem durch eine Sieblinie definierten Mischverhältnis und ein Bindemittelsystem verwendet werden, welches während des Verdichtens in seinem flüssigen Zustand die Partikel benetzt und einen Schmiereffekt bewirkt, und wobei die Mischung aus Partikeln und Bindemittelsystem in der Giessform derart verdichtet wird, dass möglichst viele der benachbarten Partikel einander berühren, wobei das Bindemittelsystem wenigstens teilweise zwischen den Partikeln verdrängt und in Holhräume zwischen den Partikeln und an die Aussenseite getrieben wird, dadurch gekennzeichnet, dass als Feinanteil des Füllstoffgemenges, also Gesteinpartikel bis zu einer Grösse von 1 mm Partikel aus Hartstoffen mit einem gegenüber dem Gestein hüheren Elastizitätsmodul und einer hüheren Festigkeit vorgesehen werden, und dass im wesentlichen kubisch gebrochene Partikel verwendet werden.

3. Verfahren nach Anspruch 2, dadurch gekennzeichnet, dass die Sieblinie für das Mischungsverhältnis der Korngrössen der Partikel durch Versuche ermittelt wird, bei welchen Prüfkörper einer Kriechprüfung ausgesetzt werden, wonach abhängig von deren Ergebnis der Anteil von Feinstpartikeln festgelegt wird.

4. Verfahren nach Anspruch 2 oder 3, dadurch gekennzeichnet, dass Partikel aus Hartstoff verwendet werden, deren Körnung nicht grösser als 1 mm ist und eine definierte Sieblinie aufweist.

**5.** Verfahren nach einem der Ansprüche 2 bis 4, dadurch gekennzeichnet, dass als Feinanteil Partikel aus Aluminiumoxyd oder Siliziumcarbid oder Siliziumnitrid oder Quarz oder Quarzglas $\alpha < 1$ aus einer Mischung dieser Materialien vorgesehen werden.

**6.** Verfahren nach einem der Ansprüche 2 bis 5, dadurch gekennzeichnet, dass ein Bindemittelsystem verwendet wird, das in flüssigem Zustand eine Viskosität von etwa 100 bis 300 mPa sec aufweist.

## Claims

**1.** A machine part, particularly for a machine tool, and consisting of polymer concrete, in which a quantity of rock particle filler is bonded into a binder matrix in mixture proportions defined by a particle-size distribution curve, as many of the adjacent particles as possible bearing one on another and being mutually supporting, characterised in that the quantity of filler consists substantially of cubic particles and in that the proportion of fines in the quantity of filler, in other words rock particles up to a size of 1 mm, consists of one or more hard substances having an elasticity modulus which is increased in relation to that of the rock and also a higher strength.

**2.** A method of producing machine parts such as machine beds, machine tool tables, machine columns, measuring tops or the like, of polymer concrete, in which a quantity of filler consisting of rock particles is blended with a binder system consisting of resin, hardener and additives, is filled into a casting mould and compacted, particles broken from high strength rocks being used in a mixture proportion defined by a particle-size distribution curve and a binder system which, during compaction in its fluid state, wets the particles and produces a lubricating effect, the mixture of particles and binder system being so compacted in the casting mould that as many as possible of the adjacent particles contact one another, the binder system being forced at least partially between the particles and into the cavities between the particles and the outside, characterised in that as the proportion of fines in the quantity of filler, in other words the rock particles up to a size of 1 mm, particles of hard substances are used which have, compared with the rock, a higher elasticity modulus and greater strength, and in that essentially cubically broken particles are used.

**3.** A method according to claim 2, characterised in that the particle distribution curve for the mixture ratio of granulations of particles is ascertained by experiments during which test bodies are exposed to a creep test after which, according to the outcome, the proportion of ultra-fine particles is established.

**4.** A method according to claim 2 or 3, characterised in that particles of hard substance are used, the granulation of which is not greater than 1 mm and which has a clearly defined particle distribution curve.

**5.** A method according to one of claims 2 to 4, characterised in that the proportion of fines used are particles of aluminium oxide or silicon carbide or silicon nitride or quartz or quartz glass $\alpha$ less than 1 or a mixture of these materials.

**6.** A method according to one of claims 2 to 5, characterised in that a binder system is used which, in the fluid state, has a viscosity of about 100 up to 300 mPa sec.

## Revendications

**1.** Elément de machine en béton synthétique, notamment pour une machine-outil, dans lequel un mélange de charge constitué de particules de roche est incorporé dans une matrice de liant, dans dos proportions d mélange définies par une courbe granulométrique, le plus possible de particules voisines s'appliquant les unes contre les autres et se soutenant mutuellement, caratérisé en ce que le mélange de charge est constitué pour l'essentiel de particules cubiques, et en ce que la fraction fine du mélange de charge, c'est-à-dire les particules de roche jusqu'à une taille de 1 mm, est constituée d'une ou plusieurs substances dures présentant un module d'élasticité et une résistance supérieurs à ceux de la roche.

**2.** Procédé pour la fabrication d'éléments de machines en béton synthétique selon la revendication 1, tels que des bancs de machines, des montants de machines, des plateaux de tables de mesure ou similaires, selon lequel on mélange un mélange de charge, constitué de particules de roche, à un système de liant comprenant une résine et un durcisseur, on remplit le mélange dans un moule de fonderie et on le comprime, les particules utilisées étant des particules de roches fractionnées à haute résistance, qui sont utilisées dans des proportions de mélange définies par une courbe granulométrique, le système de liant utilisé étant un système de liant qui imprègne les particules à son état liquide pendant la compression et qui produit un effet lubrifiant, et le mélange de particules et de système de liant étant comprimé dans le moule de fonderie de façon que le plus possible de particules voisines entrent en contact mutuel, le système de liant étant au moins partiellement déplacé entre les particules et repoussé dans des cavités entre les particules et sur le côté extérieur, caractérisé en ce qu'il est prévu comme fraction fine du mélange de charge, c'est-à-dire les particules de roche jusqu'à une taille de 1 mm, des particules de substances dures présentant un module d'élasticité et une résistance supérieurs à ceux de la roche, et en ce qu'on utilise des particules fractionnées sensiblement en forme de cubes.

3. Procédé selon la revendication 2, caractérisé en ce que la courbe granulométrique pour les proportions de mélange des calibres des particules est déterminée par des essais, au cours desquels on soumet des énchantillons à un essai de fluage, puis on établit, en fonction du résultat de cet essai, la part de particules très fines.

4. Procédé selon la revendication 2 ou 3, caractérisé en ce qu'on utilise des particules d'une substance dure dont le calibre n'est pas supérieur à 1 mm, et qui présente une courbe granulométrique définie.

5. Procédé selon l'une des revendications 2 à 4, caractérisé en ce qu'on utilise comme fraction fine des particules d'oxyde d'aluminium, ou de carbure de silicium, ou de nitrure de silicium, ou de quartz, ou de verre quartzeux de coefficient de dilatation $\alpha$ inférieur à 1, ou provenant d'un mélange de ces matériaux.

6. Procédé selon l'une des revendications 2 à 5, caractérisé en ce qu'on utilise un système de liant qui présente, à l'état liquide, une viscosité d'environ 100 à 300 mPa sec.